# EUROPEAN PATENT SPECIFICATION

(11) **EP 2 323 075 B1**
(45) Date of publication and mention of the grant of the patent: **17.02.2016**
(21) Application number: 09177531.2
(22) Date of filing: 30.11.2009
(51) Int. Cl.: G06K 19/077, H01Q 1/22, H04Q 5/00

(54) **RFID tag antenna using double-open ends coupler structure**
RFID-Antenne mit Verbindungsstruktur mit doppelten offenen Enden
Antenne à étiquette RFID utilisant une structure de couplage à double extrémité ouverte

(30) Priority: 16.11.2009 TW 98138796
(43) Date of publication of application: 18.05.2011
(73) Proprietor: ClarIDy Solutions, Inc., Songshan Taipei 105 (TW)
(72) Inventor: Chang, Chih-Chen, Banciao City Taipei County 220 (TW)
(74) Representative: Lang, Christian

(56) References cited:
- US-A- 6 126 077
- US-A- 6 140 146
- US-A- 6 154 137
- US-A1- 2010 060 421
- US-B2- 6 535 175
- US-B2- 7 545 328

## Description

### BACKGROUND OF THE INVENTION

### 1. Field of the invention

The present invention relates to an RFID tag antenna, more particularly, to an RFID tag antenna using a double-open ends coupler structure.

### 2. Description of the Prior Arts

RFID is a communication technology, which can identify a specific target and read the corresponding data via a wireless signal without a mechanical or optical contact between an identifying system and the specific target. As the wireless RFID technology became more popular, many hand held devices are installed with an RFID antenna.

RFID tag antenna can be categorized into, according to its operating frequencies, low-frequency antenna, high-frequency antenna, ultra-high frequency antenna, and microwave antenna. The low-frequency antenna is operating within the range of 125kHz to 134kHz; the high frequency antenna is operating at 13.56MHz; the ultra-high frequency antenna is operating within the range of 840MHz ∼ 960MHz; and microwave antenna is operating within the range of 2.45GHz ∼ 5.8GHz. Generally speaking, the wireless RFID tag antenna installed in the hand held electronic apparatus belongs to an ultra-high frequency antenna, and the ultra-high frequency antenna uses radiation for its transmission.

Examples for conventional antennas for RFID tags are described by US 6,535,175 B2, US 6 140 146 A and US 6,126,077.

US 6,154,137 describes an identification tag, and particularly combination tags. Fig. 7 of that document illustrates a combination tag that combines a magnetically-responsive element with an RF-responsive element to provide the advantages of both. In the combination tag an integrated circuit includes a dipole antenna, which is parasitically coupled to antennas.

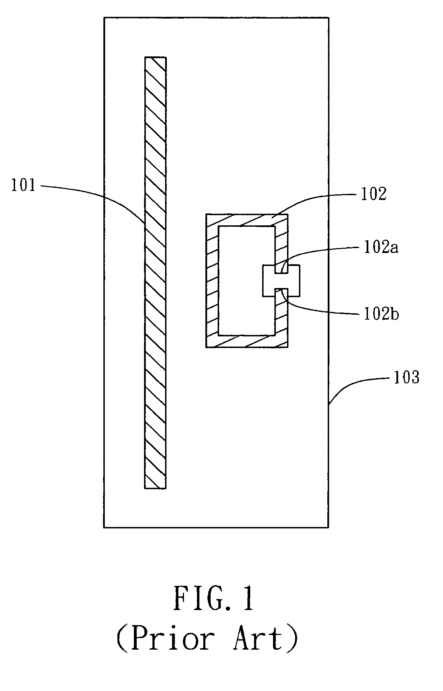

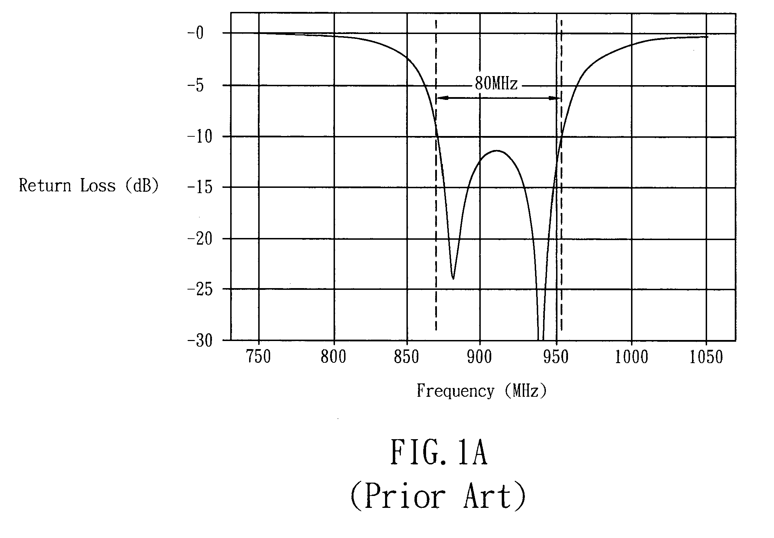

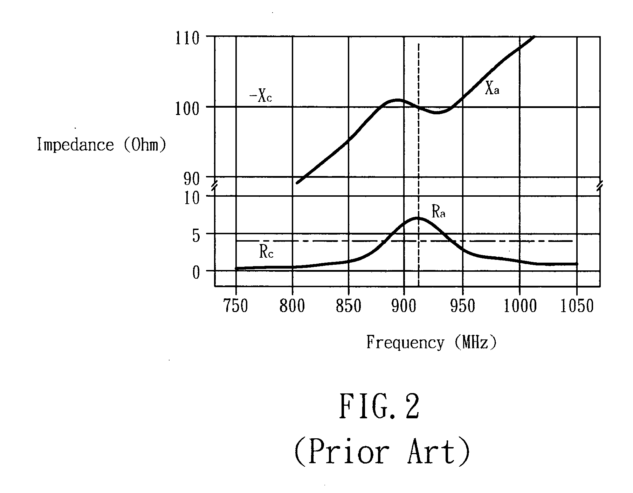

US 7,545,328 B2 discloses an RFID tag 10 and its impedance match method, as illustrated in Fig. 1 of the present specification, which comprises an antenna body 101 and a couple loop 102, disposed on a substrate 103 with two feed-in points 102a/102b. For the reason of impedance match, the couple loop 102 can be deemed as a small-scale inductor, barely having any radiation function. Alternatively, in order to achieve the impedance match between the antenna and its chip, inevitably, the small-scaled loop 102, barely having any radiation function, (the small couple loop 102 is usually smaller than 30% of the size of the antenna body 101) so as to ensure the input impedance for the antenna has appropriate inductive reactance and accordingly the capacitive reactance of the chip can be eliminated and further a conjugate match can be achieved. In the case of the match, the return loss of the input port can be illustrated in FIG. 1A, and its impedance characteristics can be further illustrated in FIG. 2 (where the real part of the input impedance of the antenna is denoted as Ra, the imaginary part is denoted as Xa; and, the real part of the input impedance of the chip is denoted as Rc, and the imaginary part is denoted as Xc).

Attention should be paid to that the couple loop 102 (also called the loop coupler) is very small, therefore it hardly radiates. Simulations show its radiation resistance is almost zero, but that of the double-open ends coupler is 15 ohms or more. Because the coupler usually has to endure high current density, the ohmic loss arising from its surface resistance cannot be neglected, especially when the commercial low-cost low-conductivity printing conductive ink is used for printing the tag antenna. Therefore, the resistance of the double-open ends coupler disclosed here can be divided into two parts: radiation resistance and ohmic resistance. The former effectively helps to improve radiation efficiency of the tag antenna.

However, the couple loop 102 hardly improves radiation efficiency of the tag antenna because of its poor radiation resistance.
WO 2011/29943 is relevant under Art. 54 (3) EPC.

Accordingly, in view of the above drawbacks of the couple loop 102, it is an imperative that a novel antenna, more particularly, a novel antenna using double-open ends coupler are designed so as to solve the drawbacks as the foregoing.

### SUMMARY OF THE INVENTION

In view of the disadvantages of prior art, the primary object of the present invention is to suggest a new UHF band RFID tag antenna system, which can broaden its bandwidth and enhance its radiation.

The invention is defined by the independent claim which is delimited against US 6,154,137 cited above. Preferred embodiments are set out in the dependent claims.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become readily understood from the detailed description given herein below and the accompanying drawings which are given by way of illustration only, and thus are not limitative of the present invention and wherein:
FIG. 1 relates to a diagram of an RFID tag antenna according to the prior art;
FIG. 1A relates to a plot of bandwidth of operating frequency of an RFID tag antenna according to the prior art;
FIG. 2 relates to a view of impedance match between an RFID tag antenna and the chip on the same according to the prior art;
FIG. 3 relates to a view of an RFID tag antenna of a preferred embodiment according to the present invention;
FIG. 3A relates to a view of an RFID tag antenna of another preferred embodiment according to the present invention;
FIG. 4 relates to a plot of an imaginary part of the impedance of an antenna according to the present invention;
FIG. 5 relates to a plot of a real part of the impedance of an antenna according to the present invention;
FIG. 6 relates to a signal plot of the return loss of an antenna according to the present invention;
FIG. 6A relates to a view of an RFID tag antenna of yet another preferred embodiment according to the present invention;
FIG. 6B relates to a view of an RFID tag antenna of yet another preferred embodiment according to the present invention; and
FIG. 7 relates to a preferred embodiment realized in the form of a patch antenna according to the present invention.

### DESCRIPTION OF THE EXEMPLARY EMBODIMENTS

The following descriptions are of exemplary embodiments only, and are not intended to limit the scope, applicability, or configuration of the invention in any way. Rather, the following description provides a convenient illustration for implementing exemplary embodiments of the invention. Various changes to the described embodiments may be made in the function and arrangement of the elements described.

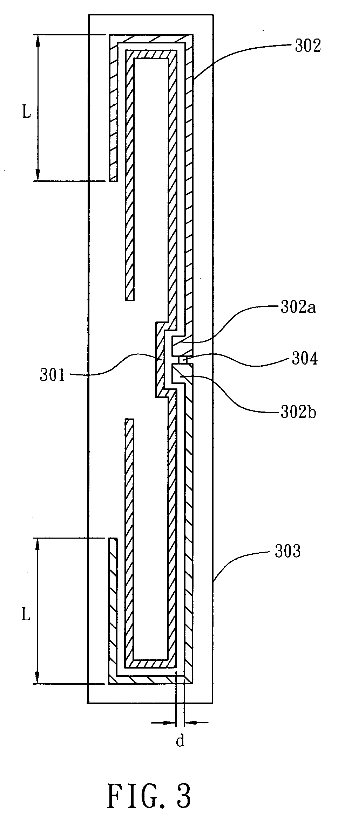

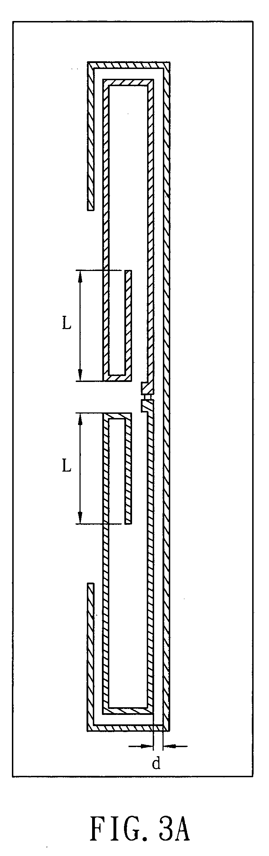

FIG. 3 relates to one of the preferred embodiments of the present invention, which illustrates an antenna body 301, and a double-open ends coupler 302, and both of them can be disposed on a substrate 303. The antenna body 301 and the double-open ends coupler 302 can be a dipole antenna but not limited thereto, and the double-open ends coupler 302 has two input ports 302a/302b disposed on the coupler 302, which are usually disposed at the middle position between the double-open ends, but not limited thereto.

The RFID tag antenna of the preferred embodiment as illustrated in FIG. 3 further comprises an RFID chip 304. The RFID chip 304 uses one pad (electrode) of the input port 302a and another pad (electrode) of the input port 302b to receive or feed in an RF signal.

At this time, the coupler 302 can be designed to be around the antenna body 301, that is, to surround the peripheral of the antenna body or the inner side of the antenna body, as illustrated in FIG. 3A, and the antenna can be operable in UHF band or microwave band.

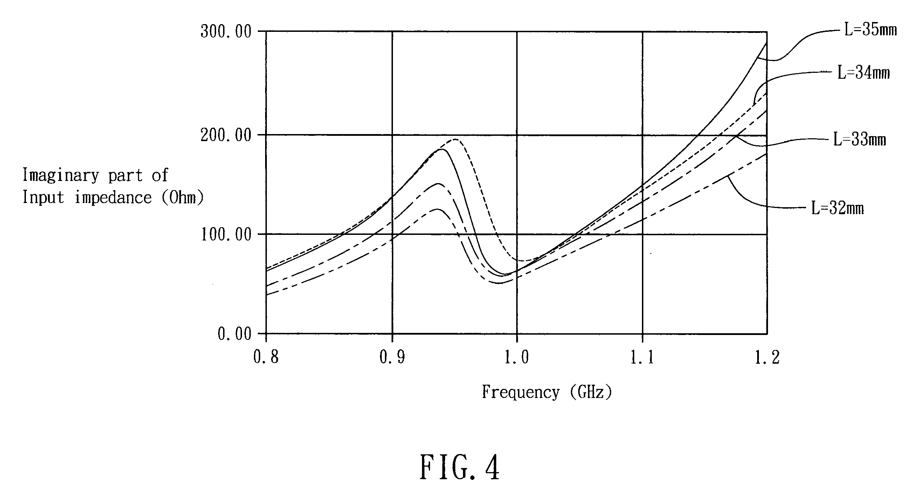

Hereby FIG. 3 further illustrates, in order to achieve the inductive input impedance for the antenna, usually, the total length of the coupler 302 is larger than about a half wavelength. On the contrary, in order to achieve the capacitive input impedance for the antenna, usually, the total length of the coupler 302 is smaller than about a half wavelength. Compared with the conventional impedance match adjustment, the methodology adopted by the present invention is to achieve the impedance match and meanwhile to take advantage of the better radiation capability of the coupler 302 itself so as to enhance the whole radiation of the antenna. The reactance value for the input impedance of the antenna will be varied according to the variation of coupler's length, which is further illustrated in FIG. 4.

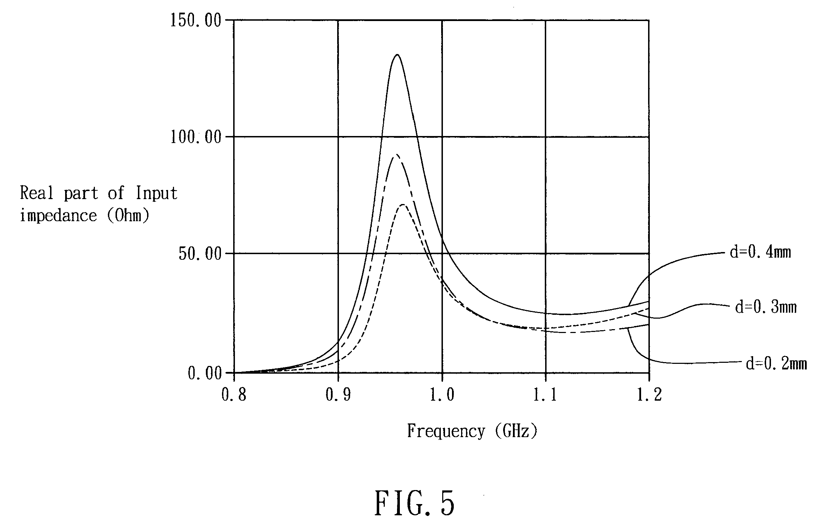

Hereby FIG. 5 further illustrates, in order to make the real part of the impedance of the antenna can achieve the desired resistance, the closer the distance d between the coupler 302 and the antenna body 301 is, the smaller its resistance value is; and the further the distance d between the coupler 302 and the antenna body 301 is, the larger its resistance value is in view achieving the real part of the desired impedance, which is illustrated in FIG. 5.

And it is the most distinguished point between the present invention and the prior art that a double-open ends coupler 302 is used to replace the couple "loop" 102, and the double-open ends coupler 302 can be deemed as a dipole antenna itself and its radiation effect is stronger the aforesaid small-scaled couple loop 102. Hence, the RFID tag antenna using double-open ends coupler structure will be of at least equivalent or better radiation effect or broader bandwidth performance than the aforesaid art.

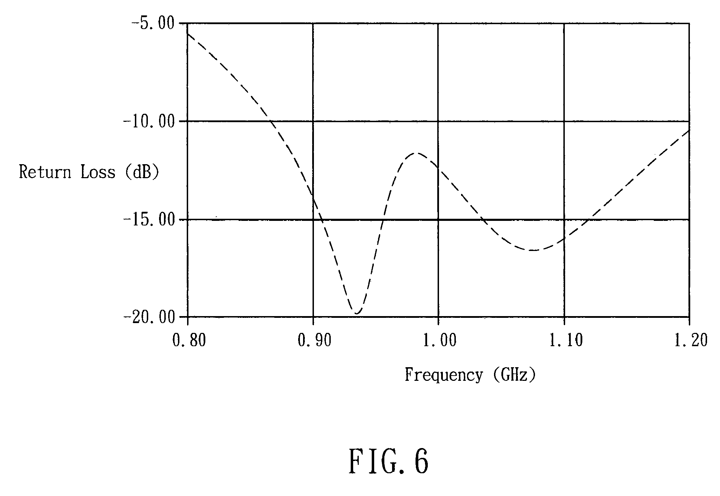

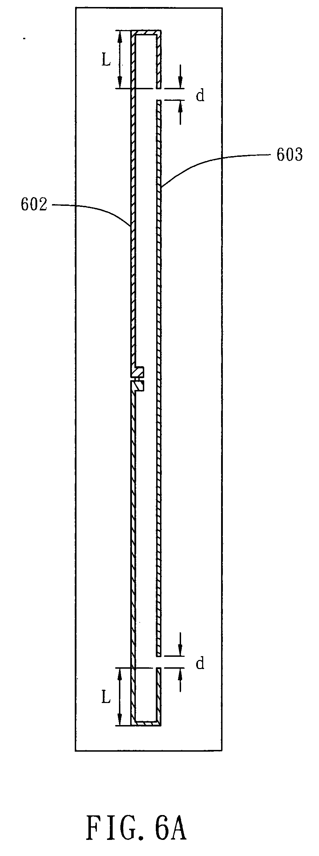

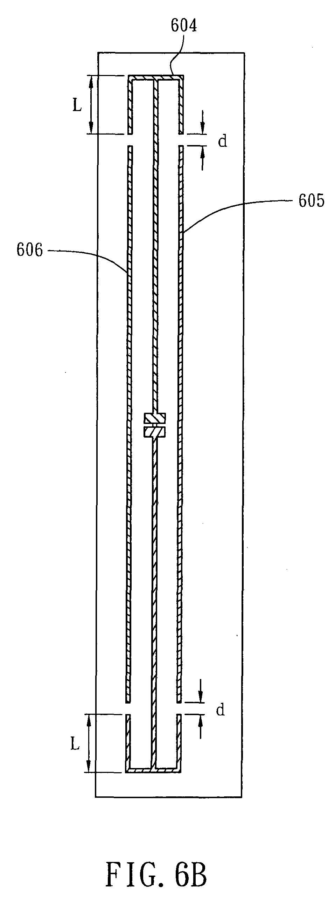

FIG. 6 relates to the signal plot of the return loss for the present invention (the present invention can achieve the bandwidth broader than 10% of the central operating frequency under impedance match).

FIG. 4∼6 illustrate an RFID tag antenna operating in UHF band, but the length of the first antenna body can be also adjusted so as to serve the purpose of higher operating frequencies such as 2.45 GHz ∼ 5.8GHz, and the coupler can be also adjusted accordingly without duplicate description.

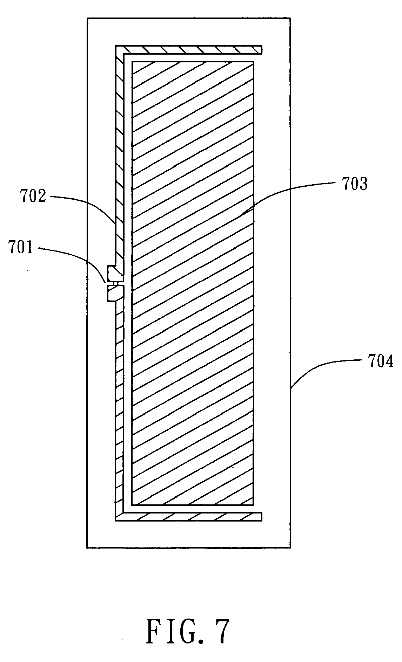

Another one of the embodiments of the present invention, as illustrated in FIG. 6A, discloses an antenna body 603 and a coupler 602 where between said 602 and said 603 the parallel distance can be affixed, however, for the four tail ends of the coupler 604 and the four tail ends of the double antenna bodies 605/606, their distances "d" can be varied. The variation of "d" can serve the same purpose as did in the embodiments of FIG. 3 and FIG. 6, where the lengths of said 605 and 606 are not necessarily identical. The variation, in addition to serve the same purpose, can lead to double coupling so as to increase the operating bandwidth. The aforesaid RFID tag antenna having double-open end coupler 302, can also adopt the form of a micro strip antenna with back ground plane. Similarly, the aforesaid RFID tag antenna having double-open end coupler 302, can also adopt the form of a patch antenna with back ground plane, and in this case, the antenna body 703 itself can be a patch antenna, and its coupler 702 can be a double-open end micro-strip antenna having a chip 701, as illustrated in FIG. 7.

The denoted "L" as illustrated in FIG. 3, FIG. 3A and FIG. 6A/B refers to the lengths between the two ends of the coupler which can be adjusted so as to achieve the goal of adjusting the imaginary part of the parameters for impedance match between the chip and the coupler, and the skilled artisan can vary the same without departing from the scope of view of the invention.

## Claims

1. An RFID system including an RFID chip (304) and a tag antenna, comprising:
at least one antenna body (301); and
a double-open ended coupler (302), adjacent to the antenna body (301), with at least two tail ends each having a length (L), with a middle portion connecting the two tail ends and with an input port (302a, 302b) to dispose the RFID chip (304) positioned on the middle portion of the double-open ended coupler (302),
**characterized in that**
a distance (d) between the double-open ended coupler (302) and the antenna body (301) is adjusted so as to match the real part of the antenna impedance with the real part of the impedance of the RFID chip (304).

2. The RFID system as recited in claim 1, wherein the antenna body (301) is a dipole antenna.

3. The RFID system as recited in claim 1, wherein a length (L) of the tail ends of the double-open ended coupler (302) is larger than a half wavelength to achieve an inductive input impedance of the RFID tag antenna.

4. The RFID system as recited in claim 1, wherein a length (L) of the tail ends of the double-open ended coupler (302) is smaller than a half wavelength to achieve a capacitive input impedance of the RID tag antenna.

5. The RFID system as recited in claim 1, wherein the length (L) of the tail ends of the double-open ended coupler (302) is adjusted so as to match the imaginary part of the antenna impedance with the imaginary part of the impedance of the RFID chip (304).

6. The RFID system as recited in claim 1, wherein the double-open ended coupler (302) is a dipole antenna.

7. The RFID system as recited in claim 1, wherein the antenna body (301) is a micro-strip-antenna.

8. The RFID system as recited in claim 1, wherein the antenna body (301) is a patch antenna and the double-open ended coupler is a micro-strip antenna.

## Patentansprüche

1. RFID - System mit einem RFID Chip und einer Etikettenantenne, umfassend:
mindestens einen Antennenkörper (301) und
einen Koppler mit doppeltem offenen Ende (302), der dem Antennenkörper (301) benachbart ist, mit mindestens zwei Enden, die jeweils eine Länge (L) aufweisen, einem Mittelbereich, der die zwei Enden verbindet, und einem Eingabeanschluss (302a, 302b), um den RFID - Chip (304), der im Mittelbereich des Kopplers mit doppeltem offenen Ende (302) angeordnet ist,
zu disponieren,
**dadurch gekennzeichnet, dass**
ein Abstand (d) zwischen dem Koppler mit doppeltem offenen Ende (302) und
dem Antennenkörper (301) angepasst ist, um den Realteil der Antennenimpedanz mit dem Realteil der Impedanz des RFID Chips (304) abzustimmen.

2. RFID - System nach Anspruch 1, wobei der Antennenkörper (301) eine Dipolantenne ist.

3. RFID - System nach Anspruch 1, wobei eine Länge (L) der Enden des Kopplers mit doppeltem offenen Ende (302) größer als eine halbe Wellenlänge ist, um eine induktive Eingabeimpedanz der RFID - Etikettenantenne zu erzielen.

4. RFID - System nach Anspruch 1, wobei eine Länge (L) der Enden des Kopplers mit doppeltem offenen Ende (302) kleiner als eine halbe Wellenlänge ist, um eine kapazitive Eingabeimpedanz der RFID - Etikettenantenne zu erzielen.

5. RFID - System nach Anspruch 1, wobei die Länge (L) der Enden des Kopplers mit doppeltem offenen Ende (302) angepasst ist, um den Imaginärteil der Antennenimpedanz mit dem Imaginärteil der Impedanz des RFID - Chips (304) abzustimmen.

6. RFID - System nach Anspruch 1, wobei der Koppler mit doppeltem offenen Ende (302) eine Dipolantenne ist.

7. RFID - System nach Anspruch1, wobei der Antennenkörper (301) eine Mikrostreifenantenne ist.

8. RFID - System nach Anspruch 1, wobei der Antennenkörper (301) eine Flächenantenne ist und der Koppler mit doppeltem offenen Ende eine Mikrostreifenantenne ist.

## Revendications

1. Système RFID comprenant une puce RFID (304) et une antenne d'étiquette comprenant :
au moins un corps d'antenne (301) et
un coupleur à double ouverture (302), adjacent au corps d'antenne (301), avec au moins deux queues qui ont chacune une longueur (L) avec une portion de milieu qui relie les deux queues et avec un port d'entrée (302a, 302b) pour disposer la puce RFID (304) positionnée sur la portion de milieu du coupleur à double ouverture (302),
**caractérisé en ce qu'**une distance (d) entre le coupleur à double ouverture (302) et le corps d'antenne (301) est ajustable pour faire correspondre la partie réelle de l'impédance de l'antenne avec la partie réelle de l'impédance de la puce RFID (304).

2. Système RFID selon la revendication 1, le corps d'antenne (301) étant une antenne dipôle.

3. Système RFID selon la revendication 1, une longueur (L) des queues du coupleur à double ouverture (302) étant plus grande qu'une moitié de longueur d'onde pour obtenir une impédance d'entrée inductive de l'antenne d'étiquette RFID.

4. Système RFID selon la revendication 1, une longueur (L) des queues du coupleur à double ouverture (302) étant plus petite qu'une moitié de longueur d'onde pour obtenir une impédance d'entrée capacitive de l'antenne d'étiquette RFID.

5. Système RFID selon la revendication 1, une longueur (L) des queues du coupleur à double ouverture (302) étant ajustée pour faire correspondre la partie imaginaire de l'impédance de l'antenne avec la partie imaginaire de l'impédance de la puce RFID (304).

6. Système RFID selon la revendication 1, le coupleur à double ouverture (302) étant une antenne dipôle.

7. Système RFID selon la revendication 1, le corps d'antenne (301) étant une antenne microruban.

8. Système RFID selon la revendication 1, le corps d'antenne (301) étant une antenne patch et le coupleur à double ouverture étant une antenne microruban.
